# EUROPÄISCHE PATENTANMELDUNG

(11) **EP 4 060 766 A1**
(43) Veröffentlichungstag der Anmeldung: **21.09.2022**
(21) Anmeldenummer: 21162908.4
(22) Anmeldetag: 16.03.2021
(51) Int. Cl.: H01M 4/139, A61B 5/03, G01N 23/046, G01N 29/04, G21K 7/00, H01M 10/42

(54) **COMPUTERGESTÜTZTES VERFAHREN ZUR ANALYSE EINER ELEKTRODENSCHICHT EINER BATTERIEZELLE MITTELS EINER KI-ENGINE, VERFAHREN ZUM TRAINIEREN EINER KI-ENGINE, HERSTELLUNGSVERFAHREN EINES BATTERIESPEICHERS UND HERSTELLUNGSEINHEIT**

(71) Anmelder: Siemens Aktiengesellschaft, 80333 München (DE)
(72) Erfinder: Schulte, Sascha, 91315 Höchstadt (DE); Baldauf, Manfred, 91056 Erlangen (DE)

(57) **Zusammenfassung**

Die Erfindung betrifft ein computergestütztes Verfahren zur Analyse einer Elektroden-Paste und/oder einer Elektrodenschicht für eine Batteriezelle mit mehreren Schritten. Zunächst erfolgt das Bereitstellen wenigstens einer Messeinrichtung zu Messen einer Eigenschaft der Elektrodenschicht-Paste und/oder der Elektrodenschicht während eines Herstellungsverfahrens. Es wird eine Eigenschaft der Elektrodenschicht-Paste und/oder der Elektrodenschicht gemessen und Messdaten werden mittels der Messeinrichtung erzeugt. Es wird eine KI-Engine bereitgestellt. Es wird ein Qualitätswerts der Elektrodenschichtpaste und/oder der Elektrodenschicht mittels der KI-Engine ermittelt. Für das Trainieren einer KI-Engine wird die Elektrodenschicht nach dem Messen der Eigenschaft in eine Batteriezelle eingebracht, die Batteriezelle wird in Betrieb genommen und Betriebsdaten der Batteriezelle werden ermittelt. Diese Betriebsdaten werden mit der Eigenschaft der Elektrodenschicht-Paste und/oder der Elektrodenschicht korreliert.

## Beschreibung

Die Erfindung betrifft ein Verfahren zur Analyse einer Elektrodenschicht-Paste und/oder einer Elektrodenschicht, ein Verfahren zum Trainieren einer KI-Engine, ein Herstellungsverfahren eines Batteriespeichers, eine Herstellungseinheit und ein Computerprogrammprodukt.

Lithium-Ionen-Akkumulatoren, im Folgenden auch Lithium-Ionen-Batterien genannt, werden aufgrund ihrer hohen Leistungsdichte und Energiedichte in mobilen und stationären Anwendungen als Energiespeicher eingesetzt.

Eine Lithium-Ionen-Batterie umfasst typischerweise mehrere Batteriezellen. Eine Batteriezelle, insbesondere eine Lithium-Ionen-Batteriezelle, umfasst eine Vielzahl von Schichten. Typischerweise umfassen diese Schichten Anoden, Kathoden, Separatoren und weitere Elemente. Diese Schichten können als Stapel oder als Wicklungen ausgestaltet sein.

Die Elektroden umfassen üblicherweise Metallfolien, insbesondere umfassend Kupfer und/oder Aluminium, welche mit einem Aktivmaterial beschichtet werden. Als Aktivmaterial wird dabei typischerweise eine lithiumverbindungen- oder Kohlenstoffhaltige Paste, Slurry genannt, aufgetragen. Die Folien und die Beschichtung weisen jeweils eine Dicke von einigen Mikrometern auf. Bereits einige Mikrometer Abweichung in der Dicke der Beschichtung oder bei der Materialzusammensetzung bergründen negative Auswirkungen auf die Qualität der Elektrode. Nachteilig werden bei unregelmäßiger Beschichtung somit qualitativ minderwertige Batteriezelle hergestellt. Weiterhin ist ein sicheres Betreiben der Batteriezelle nachteilig nicht sichergestellt.

Derzeit können im Stand der Technik fehlerhafte Beschichtungen häufig erst nach Abschluss des gesamten Produktionsprozesses der Batteriezelle im Rahmen eines sogenannten End- ofline-Tests durchgeführt werden. Teilweise werden fehlerhafte Beschichtungen auch erst nach mehreren Jahren der Batteriezelle im Betrieb festgestellt.

Nachteilig wird somit ein großer Anteil Ausschuss fehlerhafter Batteriezellen während der Batterieproduktion erzeugt. Somit weist der Produktionsprozess einen großen Materialbedarf und Energiebedarf auf, um eine ausreichende Menge qualitativ hochwertiger Batteriezellen zu produzieren.

Es ist somit Aufgabe der vorliegenden Erfindung, ein Verfahren zur Analyse während eines Herstellungsverfahrens, ein Herstellungsverfahren eines Batteriespeichers, eine Herstellungseinheit und ein Computerprogrammprodukt bereitzustellen, welche eine Ausschussquote der Batterieherstellung reduzieren.

Die Aufgabe wird erfindungsgemäß mit einem Verfahren zur Analyse einer Elektrodenschicht-Paste und/oder einer Elektrodenschicht gemäß Anspruch 1, einem Verfahren zum Trainieren einer KI-Engine gemäß Anspruch 9, einem Herstellungsverfahren eines Batteriespeichers gemäß Anspruch 12, einer Herstellungseinheit gemäß Anspruch 13 und einem Computerprogrammprodukt gemäß Anspruch 15 gelöst.

Das erfindungsgemäße computergestützte Verfahren zur Analyse einer Elektrodenschicht-Paste und/oder einer Elektrodenschicht für eine Batteriezelle umfasst mehrere Schritte. Zunächst erfolgt das Bereitstellen wenigstens einer Messeinrichtung zu Messen einer Eigenschaft der Elektrodenschicht-Paste und/oder der Elektrodenschicht während eines Herstellungsverfahrens. Mittels der Messeinrichtung wird die Eigenschaft der Elektrodenschicht-Paste und/oder der Elektrodenschicht gemessen und Messdaten werden erzeugt. Weiterhin wird eine KI-Engine bereitgestellt. Mittels der KI-Engine wird ein Qualitätswert der Elektrodenschicht-Paste und/oder der Elektrodenschicht basierend auf den Messdaten ermittelt.

In einem erfindungsgemäßen Verfahren zum Trainieren der KI-Engine wird die Elektrodenschicht nach dem Messen der Eigenschaft in eine Batteriezelle eingebracht. Die Batteriezelle wird in Betrieb genommen. Betriebsdaten der Batteriezelle werden ermittelt. Die Betriebsdaten der Batteriezelle werden mit der Eigenschaft der Elektrodenschicht und/oder der Elektrodenschicht-Paste korreliert. Basierend auf dieser Korrelation wird der Qualitätswert ermittelt.

Das erfindungsgemäße Herstellungsverfahren eines Batteriespeichers umfasst mehrere Schritte. Zunächst erfolgt das Analysieren einer Elektrodenschicht-Paste und/oder einer Elektrodenschicht für eine Batteriezelle des Batteriespeichers gemäß dem erfindungsgemäßen Verfahren zur Analyse der Elektrodenschicht. Es erfolgt das Anpassen einer Herstellungsbedingung zum Herstellen der Elektrodenschicht basierend auf wenigstens einem Qualitätswert.

Das erfindungsgemäße Herstellungsverfahren eines Batteriespeichers umfasst mehrere Schritte. Zunächst erfolgt das Analysieren einer Elektrodenschicht für den Batteriespeicher gemäß dem erfindungsgemäßen Verfahren zur Analyse der Elektrodenschicht. Die in dem computergestützten Verfahren zur Analyse eingesetzte KI-Engine wurde insbesondere gemäß des erfindungsgemäßen Verfahrens zum Trainieren der KI-Engine trainiert. Es erfolgt das Anpassen einer Herstellungsbedingung zum Herstellen der Elektrodenschicht basierend auf wenigstens einem ersten Qualitätswert.

Die erfindungsgemäße Herstellungseinheit zum Herstellen eines Batteriespeichers umfasst eine Elektrodenschichtherstellungseinrichtung mit Messeinrichtung und mit einer KI-Engine, welche eingerichtet ist, das erfindungsgemäße Verfahren zur Analyse auszuführen.

Das erfindungsgemäße Computerprogrammprodukt ist direkt in einen Speicher einer programmierbaren Recheneinheit ladbar, umfasst Programmcode-Mittel, um das erfindungsgemäße Verfahren zu Analyse auszuführen, wenn das Computerprogrammprodukt in der Recheneinheit ausgeführt wird.

Im Zusammenhang mit der Patentanmeldung kann unter einer KI-Engine ein Computersystem verstanden werden, welches eine "Anwendung", also eine ausführbare Datei oder auch eine Programmbibliothek, umfasst, welche mittels Künstlicher Intelligenz (KI) insbesondere Korrelationen unterschiedlicher Eingabedaten erlernt.

Die KI-Engine weist eine Ausführungsumgebung auf. Im Zusammenhang mit der Patentanmeldung kann unter einer Ausführungsumgebung eine virtuelle Maschine, beispielsweise eine Java Virtual Machine, ein Prozessor oder eine Betriebssystemumgebung verstanden werden. Die Ausführungsumgebung kann auf einer physikalischen Recheneinheit (Prozessor, Mikrocontroller, CPU, CPU Core) realisiert sein. Dabei kann die Ausführung der Anwendung in einem Lernmodus und in einem Ausführungsmodus auf derselben physikalischen Recheneinheit erfolgen. Ebenso ist es beispielsweise möglich, dass die Ausführung der Anwendung in einem Lernmodus in einer anderen physikalischen Recheneinheit erfolgt. So kann z.B. das Anlernen beispielsweise in einer speziellen Anlern-Recheneinheit erfolgen. Die Ausführung in einem Ausführungsmodus erfolgt beispielsweise in einer zweiten Recheneinheit, wobei die beim Anlernen ermittelte Gültigkeitsinformation bei der Ausführung in der Ausführungs-Recheneinheit verwendet wird. Die durch die Anlern-Recheneinheit beispielsweise ermittelte Gültigkeitsinformation wird vorzugsweise manipulationsgeschützt bereitgestellt.

Unter Elektrodenschicht-Paste (engl. Slurry) wird die Rohsubstanz für das Herstellen der Elektrodenschicht verstanden.

Das erfindungsgemäße Verfahren zur Analyse einer Elektrodenschicht eines Batteriespeichers nimmt bereits während der Produktion wenigstens eine Eigenschaft der Elektrodenschicht-Paste und/oder der Elektrodenschicht mittels der Messeinrichtung auf. In anderen Worten erfolgt Analysieren der Elektrodenschicht-Paste und/oder der Elektrodenschicht online, also ohne physikalisch in die Elektrodenschicht direkt eingreifen zu müssen.

Vorteilhaft wird der Qualitätswert somit nicht nur basierend auf einzelnen Grenzwerten für einzelne Produktionsschritte, insbesondere das Aufbringen der Elektrodenschicht auf ein Substrat und/oder der Elektrodenschicht-Eigenschaften, ermittelt, sondern vorteilhaft werden Betriebswerte der vollständig gefertigten Batteriezellen in die Bewertung des Qualitätswerts einbezogen. In anderen Worten geht alternativ oder zusätzlich zu Grenzwerten, welche einzelnen Produktionsschritte vorgegeben sind, mit in den Qualitätswert ein, ob die analysierten Eigenschaften der Elektrodenschicht-Paste und/oder der Elektrodenschicht mit qualitativ hochwertigen Betriebsdaten zusammenhängen. Insbesondere wird während des Trainings der KI-Engine nicht lediglich ein Grenzwert für eine genannte Eigenschaft eingehalten, sondern vielmehr das Zusammenwirken der einzelnen Eigenschaften und der Folge auf die Betriebsdaten analysiert.

In anderen Worten gehen in den Qualitätswert die Messdaten und eine Bewertung der Messdaten basierend auf einer Korrelation der Messdaten mit den Betriebsdaten ein.

Als Betriebsdaten werden insbesondere Ruhe- oder Betriebsspannung, Strom, Innenwiderstand und/oder Kapazität der Batterie im Betrieb verstanden. In anderen Worten können Betriebsdaten einen zweiten Qualitätswert darstellen.

Diese Zusammenhänge können für den Fachmann überraschend sein. Es ist möglich, dass Grenzwerte für einzelne Produktionsschritte überschritten werden, der Qualitätswert aber dennoch ausreichend gut ist. Genauso ist es möglich, dass die einzelnen Produktionsschritte innerhalb vorgegebener Grenzwerte liegen, der Qualitätswert aber dennoch als unzureichend zu bewerten ist, da sich kleine Abweichungen von einem Produktionsschritte zum nächsten Produktionsschritte aufaddieren. Durch das Trainieren der KI-Engine ist es vorteilhaft möglich, den Qualitätswert schon frühzeitig während des Herstellungsverfahrens zu ermitteln, wenn die trainierte KI-Engine in einem Herstellungsverfahren für die Analyse der Elektrodenschicht-Paste und/oder Elektrodenschicht eingesetzt wird. Somit kann vorteilhaft frühzeitig erkannt werden, wenn sich die Qualität der Elektrodenschicht verschlechtert.

Es ist weiterhin vorteilhaft möglich, eine Information, welche über eine Ausgabe von "Elektrodenschicht ist in Ordnung" oder "Elektrodenschicht ist Ausschuss" hinausgeht, zu ermitteln. Vorteilhaft kann somit eingeschätzt werden, ob die Elektrodenschicht ausreichend qualitativ gut ist, um in eine Batteriezelle verbaut zu werden. Weiterhin kann mittels des abweichenden Qualitätswerts ermittelt werden, welche der Herstellungsbedingungen vorteilhaft anzupassen sind, um die Qualität der Elektrodenschicht zu verbessern.

In einer vorteilhaften Ausgestaltung und Weiterbildung der Erfindung werden wenigstens zwei Messeinrichtungen verwendet und mit einer ersten Messeinrichtung wird eine erste Eigenschaft der Elektrodenschicht-Paste und/oder der Elektrodenschicht bestimmt und mit einer zweiten Messeinrichtung eine zweite Eigenschaft der Elektrodenschicht-Paste und/oder der Elektrodenschicht bestimmt. Vorteilhaft werden somit in die Bestimmung des Qualitätswerts eine größere Anzahl unterschiedlicher Messwerte einbezogen. Dies ermöglicht vorteilhaft eine Bestimmung des Qualitätswerts, welche robuster und zuverlässiger ist.

In einer weiteren vorteilhaften Ausgestaltung und Weiterbildung der Erfindung werden der ersten Eigenschaft und der zweiten Eigenschaft beim Messen eine Ortsinformation zugeordnet. An einem Ort wird ein Vergleichswert ermittelt. Der Vergleichswert wird in die Korrelationsbestimmung der KI-Engine während des Trainings einbezogen. Somit können Informationen über genau einen Ort der Elektrodenschicht zusammengeführt werden. Insbesondere ist es somit möglich Rückschlüsse über Formen von Löchern oder Rissen der Elektrodenschicht zu analysieren. Vorteilhaft ist es wiederum möglich anhand der Formen von Löchern oder Rissen auf mögliche fehlerhaft eingestellte Herstellungsvorrichtungen, insbesondere Auftragsvorrichtungen der Elektrodenschicht-Paste auf ein Trägersubstrat, schließen zu können. Vorteilhaft können diese fehlerhaft eingestellten Herstellungsvorrichtungen anschließend korrigiert werden.

In einer weiteren vorteilhaften Ausgestaltung und Weiterbildung der Erfindung wird die KI-Engine mittels Deep-Learning-Methoden trainiert, den ersten Qualitätswert in Qualitätsklassen einzuteilen und einen Ort der Elektrodenschicht einer Qualitätsklasse zuzuordnen. Vorteilhaft ist es somit möglich, die Elektrodenschicht ortsaufgelöst zu analysieren. Vorteilhaft kann dann gezielt ein qualitativ minderwertiger Abschnitt der Elektrodenschicht verworfen werden. Vorteilhaft wird eine minderwertige Elektrodenschicht somit nicht in die eine Batteriezelle verbaut, welche dann unzuverlässig funktionieren würde und zu Ausschuss führen würde.

In einer weiteren vorteilhaften Ausgestaltung und Weiterbildung der Erfindung wird als die Messeinrichtung eine Laserscan-Einrichtung zum Bestimmen einer topologischen Eigenschaft als Eigenschaft der Elektrodenschicht verwendet. Es wird also ein Bild der Elektrodenschicht mit einer Laserscan-Einrichtung aufgenommen. Basierend auf den Bildinformationen werden topologische Eigenschaften der Elektrodenschicht bestimmt. Vorteilhaft ermöglicht eine Korrelation der topologischen Eigenschaften der Elektrodenschichten mit den Betriebsdaten der Batteriezelle eine Bewertung der Elektrodenschicht bereits während des Herstellungsverfahrens.

In einer weiteren vorteilhaften Ausgestaltung und Weiterbildung der Erfindung werden als eine Messeinrichtung eine Porositäts-Messeinrichtung, insbesondere eine Ultraschall Messeinheit oder ein Computertomograf, zum Messen eines Porositätswerts der Elektrodenschicht verwendet.

Mittels der Analyse der topologischen Eigenschaften der Elektrodenschicht, mit der Analyse der Porosität der Elektrodenschicht und/oder mit einer Kombination aus beiden Messmethoden, wobei die Messwerte dann ortsaufgelöst am selben Ort ermittelt werden, ist es möglich, zu analysieren, ob Risse in der Elektrodenschicht vorliegen und falls ja, ob diese Risse mit einer insbesondere geringen Beschichtungsdicke und/oder einer hohen Porosität korrelieren. Es ist also vorteilhaft möglich, eine Information, welche über eine Ausgabe von "Elektrodenschicht ist in Ordnung" oder "Elektrodenschicht ist Ausschuss" hinausgeht, zu ermitteln. Vorteilhaft kann somit eingeschätzt werden, ob die Elektrodenschicht ausreichend qualitativ gut ist, um in eine Batteriezelle verbaut zu werden. Weiterhin können anhand des ersten Qualitätswerts vorteilhaft Rückschlüsse auf mögliche fehlerhafte Produktionsprozessschritte gezogen werden.

In einer vorteilhaften Ausgestaltung und Weiterbildung der Erfindung wird für wenigsten zwei Orte in der Elektrodenschicht ein Reliefwert basierend auf einem Vergleichswert und wenigstens einer Eigenschaft der Elektrodenschicht-Paste und/oder Elektrodenschicht ermittelt. Darauf basierend wird wenigstens eine Form wenigstens einer Vertiefung und/oder Anzahl von Vertiefungen basierend auf dem wenigstens einen Reliefwert ermittelt. Vorteilhaft ist es somit möglich, zu analysieren ob in der Elektrodenschicht insbesondere Risse, punktförmige Löcher oder Schwankungen der Beschichtungsdicke vorliegen. Vorteilhaft kann die Elektrodenschicht somit sehr differenziert schon während des Herstellungsprozesses analysiert werden. Basierend auf diesen Informationen kann vorteilhaft frühzeitig eingeschätzt werden, ob die Elektrodenschicht eine ausreichend hohe Qualität aufweist, sie in eine Batteriezelle einzubauen. In anderen Worten, geht in den ersten Qualitätswert auch mit ein, wie die Form der Vertiefungen strukturiert ist, wobei die unterschiedlichen Formen hinsichtlich eines Einflusses auf die Qualität der Elektrodenschicht insbesondere mittels Toleranzgrenzwerten bewertet werden.

In einer weiteren vorteilhaften Ausgestaltung und Weiterbildung der Erfindung wird als Porositäts-Messeinrichtung eine Ultraschall-Messeinheit oder ein Röntgenstrahlen-basiertes Messverfahren, insbesondere ein Computertomograf, verwendet. Vorteilhaft kann mittels diesem Messmethoden die Porosität kontaktlos während des Herstellungsprozesses ermittelt werden. Es ist zusätzlich möglich mittels der Röntgenmethoden eine Struktur der Elektrodenschicht nach dem Herstellungsprozess zu ermitteln, um die Struktur, welche mit den optischen Methoden gemessen wurde, zu verifizieren.

In einer weiteren vorteilhaften Ausgestaltung und Weiterbildung der Erfindung werden als eine Messeinrichtung eine Hyperspektralkamera und/oder eine Dielektrizitätsspektroskopie-Einheit verwendet. Mittels der Hyperspektralkamera kann basierend auf den Bilddaten insbesondere eine chemische Zusammensetzung der Elektrodenschicht als Eigenschaft bestimmt werden mittels der Dielektrizitätsspektroskopie-Einheit können insbesondere dielektrische Eigenschaften als Eigenschaft ermittelt werden.

In einer weiteren vorteilhaften Ausgestaltung und Weiterbildung der Erfindung wird als Qualitätswert ein erster Qualitätswert, insbesondere ein Durchmischungsgrad, ein Reliefwert und/oder ein Riss-Wert der Elektrodenschicht ermittelt. Vorteilhaft geben diese Größen eine Qualität der Elektrodenschicht wieder.

In einer weiteren vollhaften Ausgestaltung und Weiterbildung der Erfindung wird als Qualitätswert ein zweiter Qualitätswert, insbesondere ein Alterungsverhalten, eine Kapazität, eine Ruhespannung, eine Betriebsspannung und/oder ein Innenwiderstand der Batteriezelle und/oder des Batteriespeichers mit der Batteriezelle verwendet. In anderen Worten werden die Batteriedaten, welche mittels Messungen als Betriebsdaten ermittelt werden, als ein zweiter Qualitätswert angesehen.

In einer weiteren vorteilhaften Ausgestaltung und Weiterbildung der Erfindung wird als Porositätswert eine Porosität und/oder eine Porendichte und/oder eine Porenverteilung und/oder ein Porenvolumen ermittelt. Es ist somit möglich, die Porosität basierend auf unterschiedlichen Methoden auszuwerten und diese Ergebnisse bei Bedarf zu kombinieren.

In einer weiteren vorteilhaften Ausgestaltung und Weiterbildung der Erfindung werden als Herstellungsbedingungen Temperaturen der Lösungen und/oder Temperaturen der Umgebung, Lösungsmittelanteil in der Elektroden-Rohlösung für die Elektrodenschicht, und/oder der Durchmischungsgrad der Elektroden-Rohlösung angepasst. Eine Anpassung erfolgt derart, dass der erste Qualitätswert und/oder der zweite Qualitätswert verbessert wird.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- Figur 1: eine Herstellungseinheit mit einer Elektrodenschichtherstellungseinrichtung mit einer Laserscan-Einrichtung, einer Porositäts-Messeinrichtung und einer KI-Engine;
- Figur 2: eine Elektrodenschichtherstellungseinrichtung und zwei Batteriezellen;
- Figur 3: ein Verfahrensschema zur Analyse einer Elektrodenschicht für eine Batteriezelle.

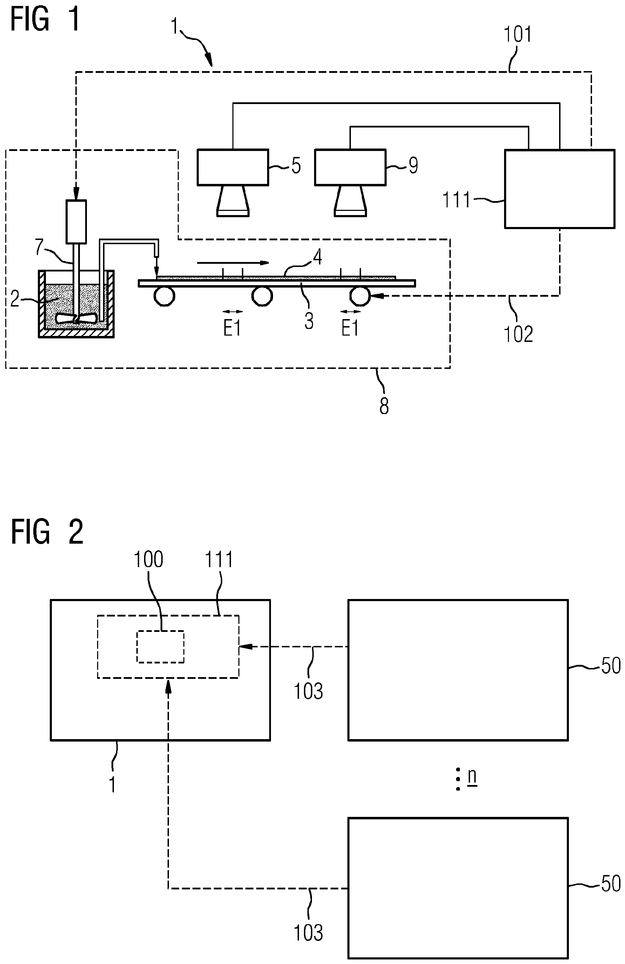

Figur 1 zeigt eine Herstellungseinheit 1. Die Herstellungseinheit 1 umfasst eine Elektrodenschichtherstellungseinrichtung 8. Die Elektrodenschichtherstellungseinrichtung 8 umfasst zwei Messeinrichtungen: Als eine erste Messeinrichtung eine Laserscan-Einrichtung 5, als eine zweite Messeinrichtung eine Porositäts-Messeinrichtung 9. Sie umfasst weiterhin eine KI-Engine 111. 100. Die KI-Engine 111 ist mit der Laserscan-Einrichtung 5 und der Porositäts-Messeinrichtung 9 über ein Datenkabel verbunden. Die Elektrodenschichtherstellungseinrichtung 8 umfasst ein Trägersubstrat 3 auf das eine Elektrodenschicht 4 aus einer Elektrodenschicht-Paste 2 (engl.: Slurry) aufgebracht wird. Die Elektrodenschicht-Paste 2 wird in einem Behälter mittels eines Rührwerks 7 homogenisiert. Das Rührwerk 7 und der Substrattransport sind ebenfalls über ein Datenkabel mit der KI-Engine 111 verbunden.

Mit der Laserscan-Einrichtung 5 wird in diesem Beispiel als eine Eigenschaft wenigstens ein Bild der Elektrodenschicht 4 und eine Ortsinformation E1 aufgenommen. Weiterhin wird mittels der Porositäts-Messeinrichtung 9 eine zweite Eigenschaft, nämlich eine Porosität und/oder eine Elektrodenschichtdicke der Elektrodenschicht 4, bestimmt. In diesem Beispiel erfolgt die Analyse an derselben Stelle der Elektrodenschicht 4, nachdem das Substrat mit der Elektrodenschicht 4 weitertransportiert wurde, nun gekennzeichnet mit der Ortsinformation E1'. Die Analyse der Porosität erfolgt während der Herstellung der Elektrodenschicht 4. Die Porositäts-Messeinrichtung ist dann insbesondere als Ultraschall-Messeinheit, als Röntgenabsorptions-Einheit oder als Computertomograf ausgestaltet.

Die Messdaten werden in diesem Beispiel an die KI-Engine 111 übertragen. In der KI-Engine 111 werden dann die topologischen Eigenschaften der Elektrodenschicht 4 basierend auf wenigstens einem Bild in Abhängigkeit der Ortsinformation E1 bestimmt. Die topologischen Eigenschaften, in anderen Worten eine dreidimensionale Abbildung der Elektrodenschichtoberfläche, werden dann mit dem Porositätswert und/oder der Elektrodenschichtdicke an diesem Ort verglichen. Basierend auf dem Vergleich wird in diesem Beispiel ein Vergleichswert ermittelt. Es ist aber ebenso möglich die beiden Eigenschaften getrennt voneinander zu betrachten.

Basierend auf diesen Vergleichswert wird ein erster Qualitätswert der Elektrodenschicht ermittelt. Als erster Qualitätswert wird insbesondere ein Durchmischungsgrad der Elektrodenschicht 4 oder eine Rauheit der Elektrodenschicht 4 ermittelt.

Das Ermitteln des Qualitätswerts erfolgt mittels der KI-Engine 111, wie in Figur 2 gezeigt. Beispiel ist die KI-Engine 111 ein Computersystem mit einer Recheneinheit 100. Die KI-Engine 111 wird mittels Betriebsdaten aus Batteriezellen 50, in welche die Elektrodenschichten 4 eingebracht wurden, trainiert: Basierend auf den Betriebsdaten wird der Qualitätswert ermittelt. Dabei wird die KI-Engine 111 trainiert, die Betriebsdaten mit den einzelnen Eigenschaften, in diesem Beispiel der Porosität und der topologischen Eigenschaft, und/oder mit dem Vergleichswert zu korrelieren und einen Qualitätswert zu bestimmen.

Dieser Qualitätswert kann insbesondere Auskunft über den Produktionsprozess geben. Insbesondere kann analysiert werden, wie Störungen relativ zueinander verteilt sind und wie deren Position zueinander ist. Insbesondere kann analysiert werden, ob Risse besonders häufig im Bereich geringer Beschichtungsdicken liegen. Weiterhin kann insbesondere analysiert werden, ob die Porosität dann hoch ist, wenn eine hohe Anzahl von Löchern auf eine lokale Position der Elektrodenschicht begrenzt sind. Im letzteren Fall kann es sein, dass die Beschichtungseinrichtung neu eingestellt werden sollte.

Zum Trainieren der KI-Engine 111 kann weiterhin eine zusätzliche Bestimmung der Porosität erfolgen. Insbesondere kann eine externe Porositätsbestimmung, insbesondere mittels optischer Methoden aus Schnittbildern oder Gas-Porosimetrien, durchgeführt werden. Die Ergebnisse dieser Porositätsbestimmung können mit den Ergebnissen des Onlineverfahrens der Porositätbestimmung verglichen werden. Weiterhin können zusätzliche Informationen über die Elektrodenschicht 4, insbesondere Rückschlüsse auf die innere Struktur, wie eine Korngrößenverteilung oder Korngrenzen, ermittelt werden.

Es ist durch den Einsatz der trainierten KI-Engine möglich, basierend auf einzelnen Eigenschaften oder basierend auf dem Vergleichswert, welcher basierend auf den Bilddaten der Laserscan-Einrichtung, der Porosität und/oder der Elektrodenschichtdicke bestimmt wird, einen Qualitätswert zu ermitteln. Vorteilhaft können Betriebsdaten von Batteriespeichern mit eingebracht werden, ohne dass jede Elektrodenschicht bereits in eine Batteriezelle eingebaut werden müsste.

Weiterhin können vorteilhaft Porositätswerte, welche offline gemessen wurden mit Porositätswerten, welche online gemessen wurden, korreliert werden, um eine Auswertung der Elektrodenschicht 4 mittels der KI-Engine weiter zu optimieren. In anderen Worten können basierend auf dem Vergleichswert auch Aussagen über die innere Struktur der Elektrodenschicht 4, insbesondere über Korngrößenverteilungen oder Korngrenzen, getroffen werden, ohne wiederum eine Offlinebestimmung der Porosität durchführen zu müssen.

Basierend auf diesem Qualitätswert können nun, wie bereits in dem ersten Ausführungsbeispiel gezeigt, Herstellungsbedingungen der Herstellungseinheit 1 angepasst werden. In diesem Beispiel wird das Rührwerk 7 der Elektroden-Rohlösung 2 mittels eines zweiten Steuersignals 102 und/oder die Laufgeschwindigkeit des Elektrodensubstrates 3 mittels eines ersten Steuersignals 101 angepasst.

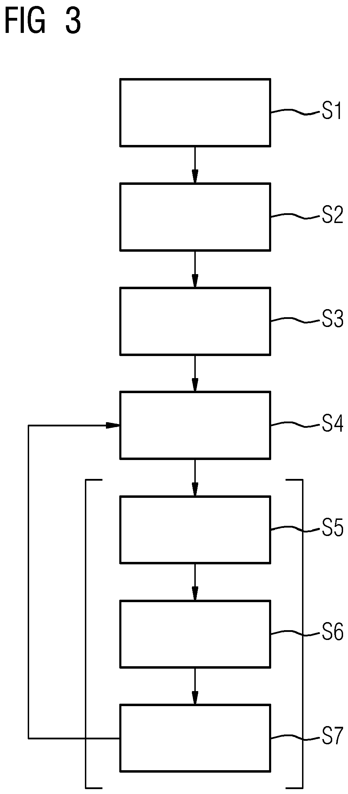

Figur 3 zeigt schematisch das Verfahren zur Analyse einer Elektrodenschicht-Paste 2 und/oder einer Elektrodenschicht 4 einer Batteriezelle 50 in einer Elektrodenschichtherstellungseinrichtung 1.

In einem ersten Schritt S1 wird wenigstens eine Messeinrichtung zu Messen einer Eigenschaft einer Elektrodenschicht-Paste 2 und/oder einer Elektrodenschicht 4 bereitgestellt. In einem zweiten Schritt S2 erfolgt das Messen der Eigenschaft der Elektrodenschicht-Paste 2 und/oder der Elektrodenschicht und das Erzeugen von Messdaten mittels der Messeinrichtung. In einem dritten Schritt S3 erfolgt das Bereitstellen einer KI-Engine 111. In einem vierten Schritt S4 erfolgt das Ermitteln eines ersten Qualitätswerts der Elektrodenschicht Paste 2 und/oder der Elektrodenschicht 4 mittels der KI-Engine. In einem fünften Schritt S5 erfolgt das Trainieren der KI-Engine. Hierfür wird in einem sechsten Schritt S6 die Elektrodenschicht nach dem Messen der Eigenschaft in eine Batteriezelle eingebracht. Die Batteriezelle wird in Betrieb genommen und die Betriebsdaten werden ermittelt. In einem siebten Schritt S7 werden die Betriebsdaten mit der Eigenschaft der Elektrodenschicht-Paste 2 und/oder der Elektrodenschicht 4 korreliert.

Mittels der trainierten KI-Engine 111 kann dann das Ermitteln des ersten Qualitätswerts der Elektrodenschicht 4 in Abhängigkeit des Vergleichswerts erfolgen, ohne dass die Elektrodenschicht 4 in eine Batteriezelle 50 eingebaut werden müsste.

In einem weiteren Beispiel, nicht in den Figuren gezeigt, umfasst die Herstellungseinheit eine Elektrodenschichtherstellungseinrichtung, eine Hyperspektralkamera als Messsensor und eine KI-Engine. Die Elektrodenschichtherstellungseinrichtung umfasst ein Trägersubstrat auf das eine Elektrodenschicht aus einer Elektrodenschicht-Paste (engl.: Slurry) aufgebracht wird. Die Elektrodenschicht-Paste wird in einem Behälter mittels eines Rührwerks homogenisiert.

Die Hyperspektralkamera nimmt ein Bild mit wenigstens zwei Bildpunkten der Elektrodenschicht auf. Die beiden Bildpunkte liegen an zueinander benachbarten Orten. Basierend auf den Bildpunkten kann eine Materialeigenschaft der Elektrodenschicht mittels der KI-Engine ermittelt werden. In diesem Beispiel erfolgt basierend auf den Bilddaten die Auswertung der Materialzusammensetzung als Materialeigenschaft. Die Materialzusammensetzungen, welche an den beiden benachbarten Orten ermittelt wurden, werden zu einem Vergleichswert zusammengefasst. Dieser Vergleichswert kann insbesondere ein Konzentrationsgradient einer definierten Materialzusammensetzung und/oder ein Konzentrationsgradient einer definierten Komponente der Elektrodenschicht-Paste, auch Elektroden-Rohlösung genannt, sein. Basierend auf diesem Vergleichswert kann dann eine charakteristische Eigenschaft ermittelt werden. Eine charakteristische Eigenschaft ist in diesem Beispiel ein Materialzusammensetzungsgradient. Basierend auf diesem Materialzusammensetzungsgradient kann insbesondere auch einen Materialhomogenitätswert bestimmt werden.

Die KI-Engine wurde auch in diesem Beispiel mittels Betriebsdaten aus der Batteriezelle, in welche die Elektrodenschichten eingebracht wurden, trainiert. Basierend auf den Betriebsdaten kann ein Qualitätswert ermittelt werden, wobei die KI-Engine trainiert wird, den Qualitätswert mit der charakteristischen Eigenschaft zu korrelieren.

Somit ist es durch den Einsatz der trainierten KI-Engine möglich, basierend auf der charakteristischen Eigenschaft, welche mittels der Hyperspektralkamera und des aufgenommenen Bildes analysiert wird, einen Qualitätswert zu bestimmen. Basierend auf diesem Qualitätswert können nun Herstellungsbedingungen der Herstellungseinheit angepasst werden. In diesem Beispiel wird das Rührwerk der Elektrodenschicht-Paste mittels eines zweiten Steuersignals und/oder die Laufgeschwindigkeit des Elektrodensubstrates mittels eines ersten Steuersignals angepasst.

Weiterhin ist es möglich anhand eines Vergleichs der benachbarten Bildaufnahmen Materialzusammensetzungsgradienten und/oder Schichtdicken zu bestimmen. Vorteilhaft kann anhand dieser Auswertung ermittelt werden, wo Defekte, wie insbesondere Risse und/oder Einschlüsse in der Elektrodenschicht vorliegen.

In einem weiteren Ausführungsbeispiel der Erfindung, welche nicht in den Zeichnungen dargestellt sind, ist sind als Messeinrichtungen zwei dielektrische Spektroskopie-Einheiten in der Herstellungseinheit angeordnet. Die Herstellungseinheit umfasst eine Elektrodenschichtherstellungseinrichtung und eine KI-Engine. Die Elektrodenschichtherstellungseinrichtung umfasst ein Trägersubstrat auf das eine Elektrodenschicht aus einer Elektrodenschicht-Paste (engl.: Slurry) aufgebracht wird. Die Elektrodenschicht-Paste für die Elektrodenschicht wird in einem Mischbehälter mittels eines Rührwerks homogenisiert.

In dem Mischbehälter ist eine erste dielektrische Spektroskopie-Einheit angeordnet. In diesem Beispiel befindet sich die erste dielektrische Spektroskopie-Einheit am Randbereich des Mischbehälter. Es ist alternativ ebenso denkbar, die dielektrische Spektroskopie-Einheit zentral im Mischbehälter oder an Orten, wie den Toträumen in den Ecken des Mischbehälter anzuordnen.

Die Elektrodenschicht-Paste wird über eine erste Leitung auf das Trägersubstrat aufgebracht. In diesem Beispiel ist in der ersten Leitung eine zweite dielektrische Spektroskopie-Einheit angeordnet. Diese gewährleistet, dass die gesamte Elektrodenschicht-Paste, bevor sie auf das Trägersubstrat aufgebracht wird, analysiert wird.

Die ermittelten Messdaten werden über Datenleitungen die KI-Engine übermittelt. In der KI-Engine wird ein erster Qualitätswert, welcher insbesondere die Leitfähigkeit oder die Homogenität der Elektrodenschicht-Paste beschreibt, ermittelt.

Die KI-Engine wird mittels Betriebsdaten aus Batteriezellen, in welche die Elektrodenschichten eingebracht wurden, trainiert. Basierend auf den Betriebsdaten kann der Qualitätswert ermittelt werden. Dafür werden die Betriebsdaten mit der dielektrischen Eigenschaft der Elektrodenschicht-Paste oder dem zeitlichen Verlauf der die elektrischen Eigenschaft zu einem Vergleichswert zusammengeführt. Dem Vergleichswert wird dann durch die KI-Engine ein Qualitätswert zugeordnet. In anderen Worten kann die KI-Engine, nachdem sie mit Betriebsdaten von Batteriezellen (oder Batteriespeichern, welche die Batteriezellen umfassen) trainiert wurde, Aussagen über die Qualität der dielektrischen Eigenschaften wie insbesondere Leitfähigkeit oder Homogenitätswert der Elektrodenschicht-Paste treffen.

Vorteilhaft ist es somit möglich, mittels des Einsatzes der KI-Engine schon sehr frühzeitig, nämlich während des Herstellungsverfahrens, Aussagen über die Qualität der Elektrodenschicht und/oder die spätere Qualität der Batteriezellen treffen zu können. Als Folge der Analyse ist es dann möglich, in das Herstellungsverfahren einzugreifen. Alternativ oder zusätzlich ist es möglich, Elektrodenschichten, welche aus der Elektrodenschicht-Paste hergestellt wurden und die Anforderungen an den ersten und/oder zweiten Qualitätswert nicht erfüllen, zu verwerfen, um den Ausschuss der Batteriezellen zu minimieren.

Vorteilhaft können Betriebsdaten von Batteriezellen mit in die Ermittlung des ersten Qualitätswerts eingebracht werden, ohne dass jede Elektrodenschicht bereits in eine Batteriezelle eingebaut werden müsste.

Die Auswahl technischer Parameter der dielektrischen Spektroskopie-Einheit, wie insbesondere einer Unterbringung des Sensors in elektrisch isolierenden Schutzelementen, die Verwendung unterschiedlicher Messfrequenzen, oder die Wahl der Elektrodenform, kann eine Messung unterschiedlicher technischer Eigenschaften des zu untersuchenden Slurry ermöglichen. Insbesondere erlaubt die elektrische Isolation der Elektroden der Spektroskopie-Einheit den Einsatz eines leitfähigen Mediums. Weiterhin erlaubt die Variation der Messfrequenz der dielektrischen Spektroskopie-Einheit eine Messung, die in bestimmten Frequenzbereichen mit der Elektroimpedanzspektroskopie vergleichbar ist. Für beide Sensoren wird eine Antwort des zu messenden Systems auf eine elektrische Schwingungsanregung bei unterschiedlichen Frequenzen analysiert. Bei der Elektroimpedanzspektroskopie wird allerdings typischerweise im Stand der Technik die vollständige Impedanz, also inklusive der Stromleitfähigkeit, einer fertig produzierten Batteriezelle ermittelt.

Vorteilhaft wird beim Messen des Slurry mit der die elektrischen Spektroskopie-Einheit, wie in diesem ersten Beispiel dargestellt, bereits während des Herstellungsverfahrens eine Änderung der dielektrischen Eigenschaften der Elektrodenschicht-Paste ermittelt. Vorteilhaft können die Herstellungsbedingungen in diesem Fall noch verändert werden.

Durch den Einsatz der dielektrischen Spektroskopie-Einheit kann ebenfalls ermittelt werden, ob die Materialien der Roh-Suspension nicht nur vermischt, sondern auch mechanisch beschädigt wurden. Je nach gewählter Messfrequenz der Spektroskopie-Einheit kann dies eine Änderung der Anregungsantwort, also der die elektrischen Eigenschaften der Roh-Suspension, zur Folge haben.

Die in den Beispielen genannten Messeeinheiten Laserscan-Einheit, Porosimetrie-Einheit, Hyperspektralkamera und dielektrische Spektroskopie-Einheit können auch in einer Herstellungseinheit verwendet werden und allesamt Messdaten für eine KI-Engine bereitstellen. Vorteilhaft erhöht dies die Robustheit der Auswertung des ersten Qualitätswerts der Elektrodenschicht.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

### Bezugszeichenliste

- 1: Herstellungseinheit
- 2: Elektrodenschicht-Paste (Slurry)
- 3: Trägersubstrat
- 4: Elektrodenschicht
- 5: Laserscan-Einrichtung
- 7: Rührwerk
- 8: Elektrodenschichtherstellungseinrichtung
- 9: Porositäts-Messeinrichtung
- 50: Batteriezelle
- 100: Recheneinheit
- 101: erstes Steuersignal
- 102: zweites Steuersignal
- 103: Betriebsdaten
- 111: KI-Engine

- S1: Bereitstellen wenigstens einer Messeinrichtung zu Messen einer Eigenschaft einer Elektrodenschicht-Paste und/oder einer Elektrodenschicht
- S2: Messen der Eigenschaft der Elektrodenschicht-Paste und/oder der Elektrodenschicht und das Erzeugen von Messdaten mittels der Messeinrichtung
- S3: Bereitstellen einer KI-Engine
- S4: Ermitteln eines ersten Qualitätswerts der Elektrodenschicht-Paste und/oder der Elektrodenschicht mittels der KI-Engine
- S5: Trainieren der KI-Engine
- S6: Einbringen der Elektrodenschicht nach dem Messen in eine Batteriezelle, Inbetriebnehmen der Batteriezelle und Ermitteln von Betriebsdaten
- S7: Korrelieren der Betriebsdaten mit der Eigenschaft der Elektrodenschicht-Paste und/oder der Elektrodenschicht

## Patentansprüche

1. Computergestütztes Verfahren zur Analyse einer Elektroden-Paste und/oder einer Elektrodenschicht (4) für eine Batteriezelle (50) mit folgenden Schritten:
- Bereitstellen wenigstens einer Messeinrichtung zu Messen einer Eigenschaft der Elektrodenschicht-Paste (2) und/oder der Elektrodenschicht (4) während eines Herstellungsverfahrens,
- Messen der Eigenschaft der Elektrodenschicht-Paste (2) und/oder der Elektrodenschicht (4) und Erzeugen von Messdaten mittels der Messeinrichtung,
- Bereitstellen einer KI-Engine (111),
- Ermitteln eines Qualitätswerts der Elektrodenschicht-Paste (2) und/oder der Elektrodenschicht (4) mittels der KI-Engine (111) basierend auf den Messdaten.

2. Computergestütztes Verfahren nach Anspruch 1, wobei wenigstens zwei Messeinrichtungen verwendet werden und mit einer ersten Messeinrichtung eine erste Eigenschaft der Elektrodenschicht-Paste (2) und/oder der Elektrodenschicht (4) bestimmt wird und mit einer zweiten Messeinrichtung eine zweite Eigenschaft der Elektrodenschicht-Paste (2) und/oder der Elektrodenschicht (4) bestimmt wird.

3. Computergestütztes Verfahren nach einem der vorhergehenden Ansprüche, wobei als Qualitätswert ein erster Qualitätswert als ein Durchmischungsgrad, ein Reliefwert, eine Porosität und/oder ein Riss-Wert der Elektrodenschicht (4) ermittelt wird.

4. Computergestütztes Verfahren nach Anspruch 3, wobei ein Reliefwert an wenigstens zwei Orten der Elektrodenschicht (4) ermittelt wird und darauf basierend eine Form wenigstens einer Vertiefung und/oder Anzahl von Vertiefungen der Elektrodenschicht (4) ermittelt werden.

5. Computergestütztes Verfahren nach einem der vorhergehenden Ansprüche, wobei als Qualitätswert ein zweiter Qualitätswert als ein Alterungsverhalten, eine Kapazität, eine Betriebsspannung, eine Ruhespannung und/oder ein Innenwiderstand der Batteriezelle (50) ermittelt wird.

6. Computergestütztes Verfahren nach einem der vorhergehenden Ansprüche, wobei als die Messeinrichtung eine Laserscan-Einrichtung (5) zum Bestimmen einer topologischen Eigenschaft als Eigenschaft der Elektrodenschicht (4) verwendet wird.

7. Computergestütztes Verfahren nach einem der vorhergehenden Ansprüche, wobei als die Messeinrichtung eine Porositäts-Messeinrichtung (9), insbesondere eine Ultraschall-Messeinheit, ein Röntgenverfahren oder ein Computertomograph, zum Messen eines Porositätswerts der Elektrodenschicht (4) verwendet wird.

8. Computergestütztes Verfahren nach einem der Ansprüche 3 bis 7, wobei als Porositätswert eine Porosität und/oder eine Porendichte und/oder eine Porenverteilung und/oder ein Porenvolumen ermittelt wird.

9. Computergestütztes Verfahren zum Trainieren einer KI-Engine zum Ausführen des Verfahrens gemäß einem der Ansprüche 1 bis 8, wobei für ein Trainieren der KI-Engine (111):
- die Elektrodenschicht (4) nach dem Messen der Eigenschaft in eine Batteriezelle (50) eingebracht wird,
- die Batteriezelle (50) in Betrieb genommen wird,
- Betriebsdaten der Batteriezelle (50) ermittelt werden, diese Betriebsdaten mit der Eigenschaft der Elektrodenschicht-Paste (2) und/oder der Elektrodenschicht (4) korreliert werden.

10. Computergestütztes Verfahren nach Anspruch 9, wobei zwei Eigenschaften der Elektrodenschicht ermittelt werden und der ersten Eigenschaft und der zweiten Eigenschaft beim Messen eine Ortsinformation zugeordnet werden und ein Vergleichswert an einem Ort (E1) ermittelt wird, wobei der Vergleichswert in die Korrelationsbestimmung der KI-Engine während des Trainings einbezogen wird.

11. Computergestütztes Verfahren nach einem der Ansprüche 9 oder 10, wobei die KI-Engine (111) mittels Deep-Learning-Methoden trainiert wird, eine Bewertung der Elektrodenschicht (4) vorzunehmen, wobei der Qualitätswert in Qualitätsklassen eingeteilt wird und einem Ort der Elektrodenschicht (4) eine Qualitätsklasse zugeordnet wird.

12. Herstellungsverfahren eines Batteriespeichers mit folgenden Schritten:
- Analysieren einer Elektrodenschicht-Paste und/oder einer Elektrodenschicht (4) für eine Batteriezelle (50) des Batteriespeichers gemäß einem computergestützten Verfahren nach einem der Ansprüche 1 bis 8, wobei eine KI-Engine insbesondere gemäß einem der Ansprüche 9 bis 11 trainiert wurde,
- Anpassen wenigstens einer Herstellungsbedingung zum Herstellen der Elektrodenschicht (4) basierend auf wenigstens einem Qualitätswert.

13. Herstellungsverfahren nach Anspruch 12, wobei als Herstellungsbedingungen Temperaturen, Lösungsmittelanteil der Elektrodenschicht-Paste, ein Durchmischungsgrad der Elektrodenschicht-Paste und/oder eine Auftragsgeschwindigkeit der Elektrodenschicht-Paste (2) auf ein Trägersubstrat (3) angepasst werden.

14. Herstellungseinheit (1) zum Herstellen eines Batteriespeichers (50) umfassend:
- eine Elektrodenschichtherstellungseinrichtung (8) mit wenigstens einer Messeinrichtung, eine KI-Engine (111) eingerichtet zum Ausführen des Verfahrens gemäß einem der Ansprüche 1 bis 11.

15. Computerprogrammprodukt, welches direkt in einen Speicher einer programmierbaren Recheneinheit ladbar ist, mit Programmcode-Mitteln, um ein Verfahren nach einem der Ansprüche 1 bis 11 auszuführen, wenn das Computerprogrammprodukt in der KI-Engine (111) ausgeführt wird.
